# EUROPÄISCHE PATENTSCHRIFT

(11) **EP 1 301 735 B1**
(45) Veröffentlichungstag und Bekanntmachung des Hinweises auf die Patenterteilung: **17.03.2004**
(21) Anmeldenummer: 01965100.9
(22) Anmeldetag: 10.07.2001
(51) Int. Cl.: F16H 15/38

(54) **STUFENLOSES REIBRADGETRIEBE**
INFINITELY VARIABLE FRICTION GEAR
TRANSMISSION A ROUES A FRICTION A VARIATION CONTINUE

(30) Priorität: 14.07.2000 DE 10034373
(43) Veröffentlichungstag der Anmeldung: 16.04.2003
(73) Patentinhaber: ZF FRIEDRICHSHAFEN Aktiengesellschaft, 88038 Friedrichshafen (DE)
(72) Erfinder: VESENJAK, Andelko, 88239 Wangen (DE)
(86) Internationale Anmeldenummer: PCT/EP2001/007918
(87) Internationale Veröffentlichungsnummer: WO 2002/006703

(56) Entgegenhaltungen:
- DE-A- 19 754 725
- DE-A- 19 826 057
- JP-A- 11 230 291
- US-A- 4 934 206
- PATENT ABSTRACTS OF JAPAN vol. 1996, no. 06, 28. Juni 1996 (1996-06-28) -& JP 08 035551 A (NIPPON SEIKO KK), 6. Februar 1996 (1996-02-06)
- PATENT ABSTRACTS OF JAPAN vol. 2000, no. 04, 31. August 2000 (2000-08-31) -& JP 2000 027963 A (MAZDA MOTOR CORP), 25. Januar 2000 (2000-01-25)
- PATENT ABSTRACTS OF JAPAN vol. 1999, no. 08, 30. Juni 1999 (1999-06-30) -& JP 11 063133 A (NIPPON SEIKO KK), 5. März 1999 (1999-03-05)

## Beschreibung

Die vorliegende Erfindung betrifft ein stufenloses Reibradgetriebe nach dem Oberbegriff des Anspruchs 1.

Ein derartiges stufenloses Reibradgetriebe weist üblicherweise koxial zu einer gemeinsamen Welle angeordnete Eingangs- und Ausgangsscheiben, auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragende Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheiben hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder jeweils an einem Träger gelagert, der über eine Verschwenkeinrichtung ansteuerbar ist.

Ein derartiges stufenloses Reibradgetriebe ist im einzelnen in der JP 11 230 291 A (& US 6 132 331 A) oder in der DE 197 54 725 der Anmelderin beschrieben. Dieses Getriebe enthält zwei Getriebeeinheiten, die koaxial zur Eingangswelle angeordnet sind, wobei jede Getriebeeinheit eine Eingangsscheibe und eine Ausgangsscheibe aufweist, zwischen denen jeweils zwei Reibräder angeordnet sind und wobei jedes Reibrad an einem schwenkbaren Träger befestigt ist. Sowohl Eingangs- als auch Ausgangsscheiben sind auf einer Drehmomentwelle gelagert, die geringfügig in Axialrichtung relativ zur Eingangswelle verschiebbar ist. Die Eingangsscheibe der einen Getriebeeinheit ist drehfest mit der Drehmomentwelle verbunden, jedoch axial gleitend auf ihr gelagert. Auch die Eingangsscheibe der anderen Getriebeeinheit ist drehfest durch eine Mitnahmeverzahnung mit der Drehmomentwelle verbunden. Die beiden Ausgangsscheiben der beiden Getriebeeinheiten sind spiegelsymmetrisch zueinander und nebeneinander im Getriebe vorgesehen und auf einer gemeinsamen Buchse angeordnet, sodass ein Drehmoment, das von der einen Eingangsscheibe der zugehörigen Ausgangsscheibe und ein Drehmoment, das von der anderen Eingangsscheibe deren zugehörigen Ausgangsscheibe übertragen wird, von den beiden drehfest mit der Buchse verbundenen Ausgangsscheiben einem Zahnrad übertragen wird, welches mit einem Zahnrad einer Ausgangswelle kämmt. Eine rollenförmige Anpreßeinrichtung beaufschlagt eine der Eingangsscheiben, die in Axialrichtung verschiebbar auf der Eingangswelle gelagert sowie drehfest mit ihr verbunden ist.

Bei den bekannten stufenlosen Reibradgetrieben erfolgt üblicherweise die Verstellung der Übersetzung durch Verschiebung der Reibräder tangential zur Getriebeachse, wobei jedoch Schwenkkräfte von den Eingangs- und Ausgangsscheiben auf das dazwischen angeordnete Reibrad einwirken, da letztere zur Momentenübertragung an das Reibrad gepreßt werden müssen. Das Reibrad ist bei den herkömmlichen stufenlosen Reibradgetrieben derart in jeder Getriebeeinheit angeordnet, dass seine Schwenkachse im Mittelpunkt des durch die zugehörigen Eingangs- und Ausgangsscheiben gebildeten Torus angeordnet ist. In den Kontaktpunkten des Reibrades mit der zugehörigen Eingangsscheibe und Ausgangsscheibe werden dabei sogenannte Normalkräfte bei der Verstellung der Übersetzung hervorgerufen.

Um zu verhindern, dass bei ungleichen während der Übersetzungsverstellung auftretenden Normalkräften das am Reibrad auftretende dadurch bedingte Drehmoment eine unerwünschte Veränderung der Übersetzung des Getriebes hervorruft, wurde bereits in der DE 198 26 057 der Anmelderin vorgeschlagen, eine mögliche Differenz der Normalkräfte durch Erzeugung einer Steuerkraft zu kompensieren, wobei bei axial gehaltenem Reibrad diese Steuerkraft, die zur Verdrehung des Reibrades führt, an einer der beiden zugehörigen Scheiben aufgebracht werden kann, während bei axialer Fixierung einer der Scheiben diese Steuerkraft auf das Reibrad einwirkt.

Es wurde auch bereits vorgeschlagen, die Reibräder in einem stufenlosen Reibradgetriebe durch zwei Verbindungsstangen abzustützen, welche den auftretenden Reaktionskräften entgegenwirken. Die Schwenkbewegung der Reibräder wird dabei durch Wälzlager ermöglicht; diese Ausgestaltung bringt jedoch noch den Nachteil eines hohen Gewichtes des Reibradgetriebes sowie einer fehlenden Kopplung der Schwenkbewegungen zweier in einer Getriebeeinheit angeordnete Träger für die Reibräder mit sich.

Es wurde ferner ein stufenloses Reibradgetriebe vorgeschlagen, bei dem an den oberen Enden und an den unteren Enden der Träger einer jeden Getriebeeinheit ein Zugmittel vorgesehen ist, beispielsweise ein Endloskabel, das die entsprechenden Enden der Träger im wesentlichen kreisförmig umschlingt und das zur Erzeugung synchroner gegenläufiger Schwenkbewegungen der Träger in Form einer 8 angeordnet ist, mit einer mittig zwischen den beiden Trägern liegenden Kreuzungsstelle. Damit kann sowohl die Aufnahme der Reaktionskräfte auf die Reibräder als auch eine Synchronisation der Schwenkwinkel der beiden zugehörigen Träger in jeder Getriebeeinheit erreicht werden.

Werden nun diese Zugmittel derart eingesetzt, dass zwischen den Trägern kein Differenzwinkel möglich ist, d. h. dass das Spiel zwischen dem Zugmittel und dem Träger sehr klein ist, können Fertigungstoleranzen zu Zwangsschlupf unter den Reibrädern führen. Wird das Zugmittel derart eingesetzt, dass ein großes Spiel zwischen dem Zugmittel und dem Träger besteht, so tritt die erforderliche Kopplung zwischen den Trägern nur dann ein, wenn bereits ein großer Differenzwinkel zwischen den beiden Trägern besteht.

Aufgabe der vorliegenden Erfindung ist es, eine Kopplung zwischen den beiden Trägern einer jeden Getriebeeinheit vorzusehen, die die Einstellung eines bestimmten vorgegebenen Differenzwinkels zwischen den beiden Trägern ermöglicht, jedoch gleichzeitig bei auftretendem Differenzwinkel eine Rückstellkraft auf die entsprechenden Träger erzeugt.

Die Lösung dieser Aufgabe erfolgt mit den im Anspruch 1 angegebenen Merkmalen; vorteilhafte Ausgestaltungen sind in den Unteransprüchen beschrieben.

Erfindungsgemäß ist also vorgesehen, dass jedem Träger einer Getriebeeinheit ein Ausgleichselement zugeordnet ist, das eine Kopplung der beiden Träger der Getriebeeinheit dahingehend bewirkt, dass es bei Auftreten eines Differenzwinkels zwischen den beiden Trägern eine Rückstellkraft auf den Träger ausübt. Die Ausgleichselemente sind vorteilhafterweise als Verbindungsteile in das Zugmittel eingesetzt.

Bei einem bevorzugten Ausführungsbeispiel weist das Ausgleichselement eine Stützscheibe auf, die an einer Feder anliegt, welche von einer Hülse umgeben ist, die verschiebbar gegen die Kraft einer weiteren Feder in einer Buchse gelagert ist, während der andere Abschnitt des Zugmittels mittig an der Stützscheibe befestigt ist.

Das Vorsehen eines Ausgleichselementes für jedes Zugmittel bringt den Vorteil mit sich, dass bei auftretenden Differenzwinkeln auf die beiden Träger eine Rückstellkraft ausgeübt wird, die dazu führt, dass dieser Differenzwinkel verkleinert wird. Gleichzeitig können Toleranzen in der Aufnahme für das Zugmittel bzw. im Zugmittel durch den flacheh Anstieg der Rückstellkraft ausgeglichen werden, ohne dass es zu Zwangsschlupf an den Berührungsstellen kommt.

Die Fertigungstoleranzen der Teile, d. h. die Halterung für das Zugmittel und das Zugmittel selbst können entsprechend vergrößert werden. Das Verhalten des stufenlosen Reibradgetriebes kann über unterschiedliche Kennlinien der verwendeten Federn beeinflußt werden.

Gleichzeitig wird durch diese Art der Kopplung die Stabilität des Reibradgetriebes erhöht; vorgesehene Dämpfer im Ausgleichselement können zusätzlich auftretende Schwingungen dämpfen.

Im folgenden wird die Erfindung anhand der Zeichnung näher erläutert, in der zwei vorteilhafter Ausführungsbeispiele dargestellt sind.
Es zeigen:
- Fig. 1: einen Radialschnitt durch eine Getriebeeinheit eines stufenlosen Reibradgetriebes,
- Fig. 2: schematisch eine Draufsicht auf ein Zugmittel mit eingesetzten Ausgleichselementen,
- Fig. 3: eine vergrößerte Darstellung eines Ausgleichselementes und
- Fig. 4: eine Teildarstellung eines Zugmittels mit einem weiteren Ausführungsbeispiel eines Ausgleichselementes.

Stufenlose Reibradvariatoren sind dem Fachmann gut bekannt, sodass im folgenden nur die für das Verständnis der Erfindung notwendigen Bauteile beschrieben und dargestellt sind. Gleiche Teile sind in den verschiedenen Figuren mit gleichen Bezugszeichen versehen.

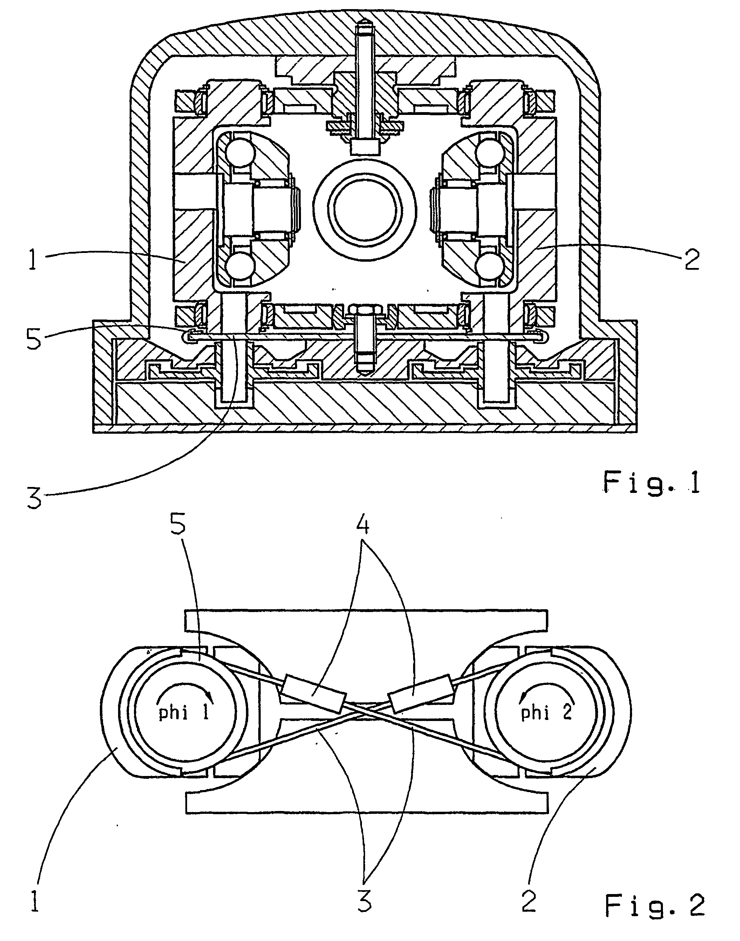

Mit 1 und 2 sind die beiden verschwenkbaren Träger für die Reibräder in einer Getriebeeinheit bezeichnet. Mit 3 ist ein Zugmittel bezeichnet, das, in Fig. 1 gesehen, am unteren Ende der beiden Träger 1, 2 für die Reibräder vorgesehen ist und diese im wesentlichen kreisförmig umschlingt, sodass die beiden Träger 1, 2 bezüglich des Schwenkwinkels gekoppelt sind. Das Zugmittel 3 wird dabei an Halterungen 5 an den Trägern 1, 2 geführt.

Erfindungsgemäß ist nun vorgesehen, eine sogenannte Phi-Kopplung zwischen den beiden Trägern 1, 2 dadurch vorzusehen, dass in das Zugmittel 3 zwei Ausgleichselemente 4 eingesetzt sind, sodass ein vorgegebener Differenzwinkel zwischen den beiden Trägern 1, 2 auftreten kann, jedoch gleichzeitig eine Rückstellkraft auf die Träger ausgeübt wird.

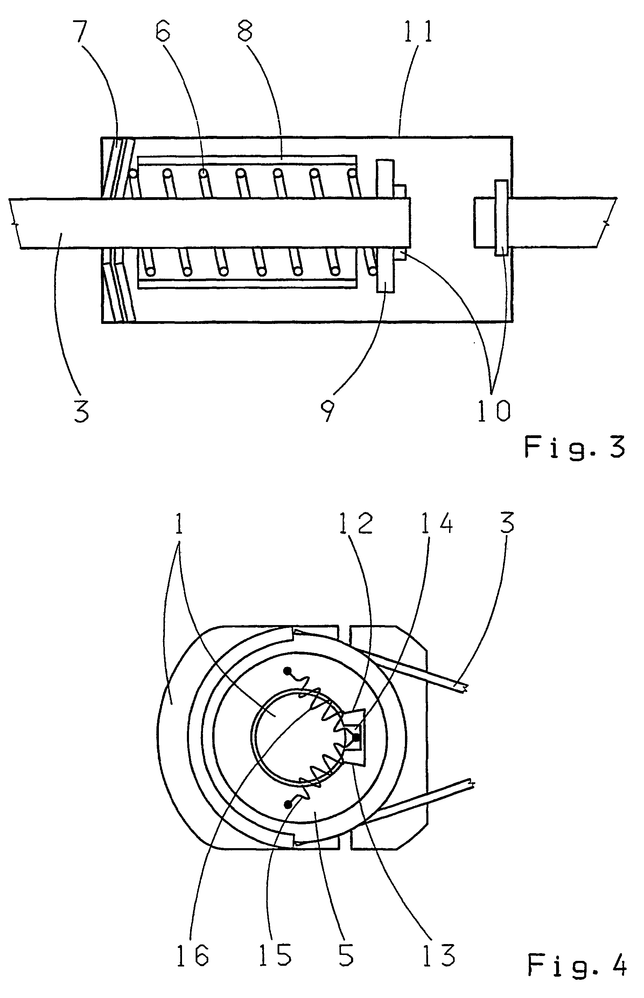

Fig. 3 zeigt einen Schnitt durch eines der Ausgleichselemente. Bei einem auftretendem Differenzwinkel (phi1-phi2) wird eine Stützscheibe 9 an eine Feder 6 gedrückt und erzeugt damit im Zugmittel 3 eine Rückstellkraft auf einen der beiden Träger 1, 2. Über eine Reihen- bzw. Parallelschaltung verschiedener Federelemente 6, 7 kann die Rückstellkraft in Abhängigkeit vom Differenzwinkel sowie anderen Parametern eingestellt werden.

Über eine Hülse 8 kann der maximal zulässige Differenzwinkel begrenzt werden. Vorteilhafterweise ist die Rückstellkraft auf die Träger bei geringem Differenzwinkel klein, damit Fertigungstoleranzen nicht zu große Rückstellkräfte erzeugen. Bei größerem Differerizwinkel hingegen ist es vorteilhaft, wenn die Rückstellkraft stark ansteigt, damit bei auftretenden Schwingungen die Wirkung dieser Phi-Kopplung zum Tragen kommt. Genauso gut möglich ist es, in das Ausgleichselement 4 einen Dämpfer zu integrieren.

Das eine Ende des Zugmittels 3 ist über eine Feststellscheibe 10 mit der Stützscheibe 9 verbunden, während das andere Ende des Zugmittels 3 über eine Feststellscheibe 10 mit der Buchse 11 verbunden ist.

Bei dem in Fig. 4 dargestellten Ausführungsbeispiel für ein Ausgleichselement ist mit 5 wieder die Halterung für das Zugmittel 3 bezeichnet; der Träger 1 weist einen Vorsprung 14 auf, der in eine entsprechende Aussparung eingreift, wobei seine Verdrehung durch zwei Anschläge 12, 13 begrenzt ist. Zwei Federn 15, 16 sind jeweils mit einem Ende an der Halterung 5 für das Zugmittel 3 befestigt und mit ihrem anderen Ende mit dem Vorsprung 14 des Trägers 1 verbunden. Auch hierbei kann wieder durch die Einstellung der Federkennlinien das Ausmaß der Rückstellkräfte auf die Träger beeinflußt werden.

### Bezugszeichen

- 1: Träger
- 2: Träger
- 3: Zugmittel
- 4: Ausgleichselement
- 5: Halterung
- 6: Feder
- 7: Feder
- 8: Hülse
- 9: Stützscheibe
- 10: Feststellscheibe
- 11: Buchse
- 12: Anschlag
- 13: Anschlag
- 14: Vorsprung
- 15: Feder
- 16: Feder

## Patentansprüche

1. Stufenloses Reibradgetriebe mit:
mehreren Getriebeeinheiten, wobei jede Getriebeeinheit eine koaxial zur Eingangswelle vorgesehene Eingangsscheibe mit einer toroidförmigen Innenfläche und eine koaxial zur Eingangswelle angeordnete Ausgangsscheibe mit einer toroidförmigen Innenfläche aufweist und wobei jeweils eine Eingangsscheibe und eine Ausgangsscheibe ein Paar bilden,
mehreren Reibrädern, die zwischen den Paaren aus Eingangsscheibe und Ausgangsscheibe verschwenkbar angeordnet sind und jeweils an einem Träger gelagert sind, zur Übertragung eines Drehmoments von der Eingangsscheibe auf die dazugehörige Ausgangsscheibe durch Verschwenkung der Träger und damit der Reibräder und
einem Zugmittel, das die Enden der Träger im wesentlichen kreisförmig umschlingt und zur Erzeugung einer synchronen gegenläufigen Schwenkbewegung in Form einer 8 angeordnet ist, mit einer mittig zwischen den beiden Trägern liegenden Kreuzungsstelle,
**dadurch gekennzeichnet, dass** jedem Träger einer Getriebeeinheit ein Ausgleichselement (4) zugeordnet ist, das eine Kopplung der beiden Träger (1, 2) der Getriebeeinheit dahingehend bewirkt, dass es bei Auftreten eines Differenzwinkels zwischen den beiden Trägern eine Rückstellkraft auf die Träger ausübt.

2. Stufenloses Reibradgetriebe nach Anspruch 1, **dadurch gekennzeichnet, dass** die Ausgleichselemente (4) als Verbindungsteile in das Zugmittel (3) eingesetzt sind.

3. Stufenloses Reibradgetriebe nach einem der vorhergehenden Ansprüche, **dadurch gekennzeichnet, dass** jedes Ausgleichselement eine Stützscheibe (9) aufweist, die an einer Feder (6) anliegt, welche von einer Hülse (8) umgeben ist, die verschiebbar gegen die Kraft einer weiteren Feder (7) in einer Buchse (11) gelagert ist, dass der eine Abschnitt des Zugmittels (3) mittig an der Stützscheibe (9) befestigt ist und dass der andere Abschnitt des Zugmittels (3) an der der Stützscheibe (9) zugewandten Stirnseite der Buchse (11) befestigt ist.

4. Stufenloses Reibradgetriebe nach Anspruch 1, **dadurch gekennzeichnet, dass** die Ausgleichselemente (4) direkt an den Trägern (1, 2) vorgesehen sind.

5. Stufenloses Reibradgetriebe nach Anspruch 4, **dadurch gekennzeichnet, dass** jedes Ausgleichselement zwei Federn (15, 16) aufweist, deren jeweils eines Ende an der Halterung (5) für das Zugmittel (3) befestigt ist und deren jeweils anderes Ende an einem Vorsprung (14) des Trägers (1) befestigt ist, wobei der Vorsprung (14) in eine Aussparung in der Halterung (5) eingreift und zwischen zwei die Aussparung begrenzenden Anschlägen (13, 12) verschwenkbar ist.

## Claims

1. Infinitely variable friction gear having:
a plurality of gear units, wherein each gear unit comprises an input disk with a toroidal inner surface provided coaxially with the input shaft as well as an output disk with a toroidal inner surface disposed coaxially with the input shaft and wherein in each case one input disk and one output disk form a pair,
a plurality of friction wheels, which are disposed in a swivelling manner between the pairs of input disk and output disk and mounted in each case on a carrier, for the transmission of a torque from the input disk to the associated output disk by swivelling of the carriers and hence of the friction wheels, and
a pulling mechanism, which is looped in a substantially circular manner around the ends of the carriers and for generating a synchronous oppositely directed swivelling movement is disposed in the shape of a figure 8, having a crossing point lying midway between the two carriers,
**characterized in that** there is associated with each carrier of a gear unit a compensation element (4), which effects a coupling of the two carriers (1, 2) of the gear unit in such a way that, in the event of a differential angle between the two carriers, the compensation element exerts a restoring force upon the carriers.

2. Infinitely variable friction gear according to claim 1, **characterized in that** the compensation elements (4) are inserted as connecting parts into the pulling mechanism (3).

3. Infinitely variable friction gear according to one of the preceding claims, **characterized in that** each compensation element comprises a support disk (9), which lies against a spring (6), which is surrounded by a sleeve (8), which is mounted displaceably counter to the action of a further spring (7) in a bush (11), that the one portion of the pulling mechanism (3) is fastened centrally to the support disk (9) and that the other portion of the pulling mechanism (3) is fastened to the end face of the bush (11) facing the support disk (9).

4. Infinitely variable friction gear according to claim 1, **characterized in that** the compensation elements (4) are provided directly on the carriers (1, 2).

5. Infinitely variable friction gear according to claim 4, **characterized in that** each compensation element comprises two springs (15, 16), of which in each case one end is fastened to the mounting (5) for the pulling mechanism (3) and the other end is fastened to a projection (14) of the carrier (1), wherein the projection (14) engages into a recess in the mounting (5) and is able to swivel between two stops (13, 12) delimiting the recess.

## Revendications

1. Transmission à roues de friction variable en continu, comprenant :
plusieurs unités de transmission, chaque unité de transmission ayant une poulie d'entrée prévue coaxialement à l'arbre d'entrée et comportant une surface intérieure toroïdale, et une poulie de sortie disposée coaxialement à l'arbre d'entrée et comportant une surface intérieure toroïdale, une poulie d'entrée formant une paire avec une poulie de sortie,
plusieurs roues de friction qui sont disposées mobiles en mouvement de pivotement entre les paires composées d'une poulie d'entrée et d'une poulie de sortie et tourillonnées chacune sur un support, pour transmettre un couple de la poulie d'entrée à la poulie de sortie correspondante par le pivotement des supports et, avec eux, des roues de friction, et
un moyen de traction qui entoure les extrémités des supports sensiblement en forme de cercle et qui est disposé en forme de huit, avec un point de croisement situé au milieu entre les deux supports pour produire un mouvement de pivotement des supports en synchronisme et en sens inverse l'un de l'autre,
**caractérisée en ce que**, à chaque support d'une unité de transmission, est associé un élément de compensation (4) qui détermine un accouplement des deux supports (1, 2) de l'unité de transmission d'une manière telle que, lors de l'apparition d'un angle différentiel entre les deux supports, cet élément exerce une force de rappel sur les supports.

2. Transmission à roues de friction variable en continu selon la revendication 1, **caractérisée en ce que** les éléments de compensation (4) sont incorporés dans le moyen de traction (3) sous la forme de pièces de liaison.

3. Transmission à roues de friction selon l'une des revendications précédentes, **caractérisée en ce que** chaque élément de compensation comporte un disque de soutien (9) qui est en appui contre un ressort (6), lequel est entouré d'une douille (8) qui est montée mobile en translation à l'encontre de la force d'un autre ressort (7) à l'intérieur d'un manchon (11), **en ce que** l'un des segments du moyen de traction (3) est fixé en son milieu au disque d'appui (9) et **en ce que** l'autre segment du moyen de traction (3) est fixé au côté frontal du manchon (11) qui est dirigé vers le disque de soutien (9).

4. Transmission à roues de friction variable en continu selon la revendication 1, **caractérisée en ce que** les éléments de compensation (4) sont prévus directement sur les supports (1, 2).

5. Transmission à roues de friction variable en continu selon la revendication 4, **caractérisée en ce que** chaque élément de compensation comprend deux ressorts (15, 16) ayant chacun une extrémité fixée à la monture (5) prévue pour le moyen de traction (3) et l'autre extrémité fixée à une saillie (14) du support (1), la saillie (14) étant engagée dans un évidement ménagé dans la monture (5) et pouvant pivoter entre deux butées (13, 12) qui limitent l'évidement.
